# FASCICULE DE BREVET EUROPEEN

(11) **EP 2 817 964 B1**
(45) Date de publication et mention de la délivrance du brevet: **09.09.2020**
(21) Numéro de dépôt: 13707586.7
(22) Date de dépôt: 22.02.2013
(51) Int. Cl.: H04N 7/18, G06K 9/00

(54) **PROCÉDÉ ET SYSTÈME DE SUPERVISION D'UNE SCÈNE, NOTAMMENT DANS UN SITE DE VENTE**
VERFAHREN UND VORRICHTUNG ZUR ÜBERWACHUNG EINER KAUFHAUS-UMGEBUNG
METHOD AND SYSTEM FOR SCENE SUPERVISION, ESPECIALLY IN A RETAIL STORE

(30) Priorité: 23.02.2012 FR 1251684
(43) Date de publication de la demande: 31.12.2014
(73) Titulaire: Cliris, 92400 Courbevoie (FR); Zeller, Alexandre, 92200 Neuilly Sur Seine (FR)
(72) Inventeur: ZELLER, Alexandre, F-92200 Neuilly-sur-Seine (FR); REVUE, Alexandre, F-92250 La Garenne Colombes (FR); SEYVE, Christophe, F-75013 Paris (FR)
(74) Mandataire: IP Trust
(86) Numéro de dépôt international: PCT/EP2013/053540
(87) Numéro de publication internationale: WO 2013/124407

(56) Documents cités:
- WO-A1-03/067884
- US-A1- 2008 077 510
- SI LUO ET AL: "A Background Model Estimation Algorithm Based on Analysis of Local Motion for Video Surveillance", INFORMATION, COMMUNICATIONS AND SIGNAL PROCESSING, 2005 FIFTH INTERNAT IONAL CONFERENCE ON BANGKOK, THAILAND 06-09 DEC. 2005, PISCATAWAY, NJ, USA,IEEE, PISCATAWAY, NJ, USA, 6 décembre 2005 (2005-12-06), pages 700-704, XP010937408, ISBN: 978-0-7803-9283-0

## Description

### Domaine technique

La présente invention concerne un procédé pour superviser une scène, par exemple un linéaire d'une surface de vente. Elle concerne aussi un système de supervision pour la mise en œuvre de ce procédé.

Le domaine de l'invention est plus particulièrement celui de la distribution commerciale et de la gestion du réapprovisionnement des surfaces de vente.

### Etat de la technique antérieure

Une gestion optimale du réapprovisionnement des rayons d'un magasin est un facteur clé pour leur attractivité et leur rentabilité. Pour assurer cette gestion, il existe désormais des techniques de supervision mettant en œuvre des caméras vidéo disposées pour capter des vues de rayons et des outils de traitement d'image prévus pour comparer ces vues à des vues de référence, détecter des différences entre vues acquises et vues de référence, et délivrer des informations sur les besoins en réapprovisionnement.

Toutefois ces outils de supervision voient leur efficacité réduite du fait que les champs des visions des caméras peuvent être obstrués au moins partiellement par la présence d'un chariot, d'une personne ou de tout autre obstacle. Par ailleurs, dans le cas de la présence d'une ou plusieurs personnes dans le champ de vision d'une caméra, les prises de vue et le stockage d'images incluant ces personnes peut constituer dans certains pays une violation de dispositions légales sur la vie privée des personnes.

Le document "A Background Model Estimation Algorithm Based onAnalysis of Local Motion for Video Surveillance", INFORMATION, de SI LUO ET AL, publié dans COMMUNICATIONS AND SIGNAL PROCESSING, 2005 FIFTH INTERNATIONAL CONFERENCE ON BANGKOK, THAILAND 06-09, DEC. 2005, pages 700-204, divulgue un procédé de supervision d'une scène, comprenant une prise d'images de cette scène par au moins une caméra dont le champ de vision couvre au moins en partie cette scène, et un traitement de ces images pour détecter un changement survenu dans cette scène, une détection d'une occultation au moins partielle du champ de vision de la caméra par un objet ou une personne, et une suppression dans les images de scène ainsi traitées, des images de l'objet ou de la personne.

Le document US2008/077510A1 divulgue un système et procédé pour fournir des fonctions de surveillance d'étagères à un système de vente au détail, comprenant un système de sécurité vidéo, de sorte que la sécurité et la distribution du produit dans une zone de stockage de produit soient surveillées en utilisant le même réseau de caméra vidéo. Ce procédé comprend une acquisition d'une image vidéo d'au moins une partie d'au moins une étagère à l'aide d'au moins une caméra vidéo montée dans un emplacement fixe et une transmission de l'image vidéo à un module de surveillance d'étagère d'un système de traitement et à un module de sécurité de ce système de traitement.

Le document WO 03/067884 A1 divulgue un appareil et procédé permettant d'analyser une séquence d'images capturées couvrant une scène aux fins de la détection et de la poursuite d'objets mobiles et immobiles ainsi qu'aux fins de la confrontation des caractéristiques d'un comportement d'objets dans les images capturées avec celles d'un comportement d'objet dans des scénarios prédéterminés.

Un but de la présente invention est de remédier aux inconvénients et limitations des techniques existantes, en proposant un procédé de supervision qui permette d'améliorer sensiblement l'efficacité opérationnelle de la supervision tout en contribuant au respect des personnes présentes dans les champs de vision, qu'ils s'agisse de clients ou d'employés.

Un autre but de la présente invention est de proposer un procédé de supervision qui soit plus facile et moins coûteux de mise en œuvre que les techniques existantes dans ce domaine.

### Exposé de l'invention

Cet objectif est atteint avec un procédé de supervision d'une scène, mis en œuvre pour la supervision de linéaires dans un site de vente, comprenant :
- une prise d'images de cette scène par au moins une caméra dont le champ de vision couvre au moins en partie ladite scène, et un traitement de ces images pour détecter un changement survenu dans ladite scène,
- une détection d'une occultation au moins partielle du champ de vision de ladite caméra par un objet ou une personne,
   le traitement des images de la scène comprenant un processus d'apprentissage de fond contextualisé, agencé pour supprimer l'image d'une personne ou d'un objet occultant temporairement une partie du champ de vision de ladite scène,
   caractérisé en ce que le processus d'apprentissage de fond contextualisé comprend :
   - un test d'occultation réalisé sur un repère fixe d'une image de la scène supervisée, de façon à identifier dans l'image traitée un contour de la personne ou de l'objet occultant,
   - une extraction d'un masque d'occultation, dans laquelle des objets ou personnes occultant un rayon dudit linéaire sont représentés en blanc et les personnes qui dépassent ledit repère sur ledit rayon sont exclus,
   - un masquage, par ledit masque d'occultation, des clients passant dans le champ de vision de ladite caméra, de sorte que le fond de scène est appris progressivement en excluant des objets ou personnes devant ledit rayon,
   et en ce que ledit procédé de supervision comprend en outre, à la suite du processus d'apprentissage de fond contextualisé :
   - un processus de restitution d'une image de fond de scène, et
   - un processus de détection automatisée de ruptures d'approvisionnement et d'occultations.

Un repère fixe peut être un rail porte étiquette, un rayon, une étagère, le bas d'un meuble, une barre de protection contre les chocs avec les chariots ou tout autre élément connu de la scène, etc.

Le procédé de supervision selon l'invention peut en outre comprendre, à la suite du processus d'apprentissage de fond contextualisé, un processus de restitution d'une image de fond de scène.

Le processus de restitution d'une image de fond peut en outre comprendre une correction de perspective appliquée à une image de fond obtenue par apprentissage progressif, de façon à produire une restitution périodique de la scène aplanie.

Lorsqu'il est mis en œuvre pour la supervision de linéaires dans un site de vente, le procédé selon l'invention comprend en outre, à la suite du processus de restitution d'une image de fond, un processus de détection automatisée de ruptures d'approvisionnement et d'occultations.

Ce processus de détection automatisée comprend :
- une comparaison automatique d'une image traitée et corrigée actuelle d'un linéaire avec une image traitée et corrigée dudit linéaire prise antérieurement,
- une détection d'un changement structurel dans l'image dudit linéaire, et
- une identification dudit changement structurel ainsi détecté.

Le procédé de supervision selon l'invention peut en outre avantageusement comprendre un processus de vérification automatisée de la conformité d'un linéaire supervisé à un planogramme.

Suivant un autre aspect de l'invention, il est proposé un système de supervision d'une scène, mis en œuvre pour la supervision de linéaires dans un site de vente, comprenant :
- des moyens pour prendre des images de cette scène par au moins une caméra selon un champ de vision couvre au moins en partie ladite scène, et
- des moyens pour traiter ces images de façon à :
- détecter un changement survenu dans ladite scène,
- détecter une obstruction au moins partielle du champ de vision desdits moyens de prise d'image par un objet ou une personne, et
- supprimer dans les images de scène ainsi traitées, les images dudit objet ou de ladite personne,
les moyens de traitement comprenant en outre des moyens d'apprentissage de fond contextualisé, agencés pour supprimer l'image d'une personne ou d'un objet occultant temporairement une partie du champ de vision de ladite scène,
caractérisé en ce que les moyens d'apprentissage de fond contextualisé comprennent des moyens pour réaliser :
- un test d'occultation réalisé sur un repère fixe d'une image de la scène supervisée, de façon à identifier dans l'image traitée un contour de la personne ou de l'objet occultant,
- une extraction d'un masque d'occultation, dans laquelle des objets ou personnes occultant un rayon dudit linéaire sont représentés en blanc et les personnes qui dépassent ledit repère sur ledit rayon sont exclus,
   et
- un masquage, par ledit masque d'occultation, des clients passant dans le champ de vision de ladite caméra, de sorte que le fond de scène est appris progressivement en excluant des objets ou personnes devant ledit rayon,
   et en ce que les moyens de prise d'image comprennent des caméras fixées à plusieurs desdits linéaires et agencées pour acquérir des vues d'au moins un rayon d'un linéaire situé en vis-à-vis des dits linéaires auxquelles lesdites caméras sont fixées.

Lorsque le système selon l'invention est mis en œuvre pour la supervision d'un site de vente équipés de linéaires, les moyens de prise d'image peuvent comprendre des caméras fixées à plusieurs desdits linéaires et agencées pour acquérir des vues d'au moins un rayon d'un linéaire situé en vis-à-vis des dits linéaires auxquelles lesdites caméras sont fixées.

Des caméras peuvent être fixées en extrémité de rayons d'un linéaire, et notamment intégrées dans des porte-étiquettes disposées en extrémité de rayons d'un linéaire. Elles peuvent aussi être fixées au dessus d'un linéaire.

Ces caméras, de préférence compactes, peuvent être dissimulées derrière des écrans optiques à transmission partielle ou sélective.

Dans un mode particulier de mise en œuvre de l'invention, le système de supervision peut en outre comprendre sur chaque linéaire au moins une unité de traitement compacte à laquelle un groupe de caméras fixées sur ledit linéaire sont connectées, lesdites unités de traitement compactes étant reliées à un système d'information équipant le dite de vente et étant agencées pour traiter localement des images reçues des caméras.

Le système d'information peut avantageusement faire fonction de concentrateur pour acheminer des images traitées reçues des unités de traitement compactes vers un serveur de supervision distant.

Le système de supervision selon l'invention peut en outre comprendre des moyens de maillage sans fil pour connecter les unités de traitement compactes entre elles et au système d'information.

Des unités de traitement compactes peuvent en outre être agencées pour réaliser localement une anonymisation des images des linéaires en face reçues des caméras connectées auxdites unités de traitement compactes.

Ces unités de traitement compactes peuvent aussi réaliser une mise à plat des images statiques des linéaires en face reçues des caméras connectées auxdites unités de traitement compactes, de façon à fournir des images de format similaire à celui de planogrammes. Elles peuvent aussi détecter, dans des images de rayons de linéaires en face, des trous d'approvisionnement.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- la figure 1 illustre schématiquement les fonctionnalités principales d'un système de supervision selon l'invention ;
- la figure 2 est une vue latérale de deux linéaires équipés chacun d'une caméra de supervision fixée à un rayon ;
- la figure 3 une vue latérale d'une variante de l'invention, dans laquelle une caméra est fixée en haut d'un linéaire ;
- la figure 4 illustre un mode de réalisation d'un système de supervision selon l'invention, dans lequel des caméras sont intégrées dans des linéaires derrière des miroirs sans tain ;
- la figure 5 est une vue de dessus d'un ensemble de deux linéaires équipés d'un système de supervision selon l'invention ;
- la figure 6 est une vue de dessus d'un ensemble de linéaires équipés d'un système de supervision selon l'invention pourvu d'un équipement de maillage sans fil ;
- la figure 7 illustre un processus d'apprentissage de fond contextualisé mis en œuvre dans le procédé de supervision selon l'invention ;
- la figure 8 illustre un processus de restitution d'image de fond mis en œuvre dans le procédé de supervision selon l'invention ;
- la figure 9 illustre un processus de détection automatisée de ruptures d'approvisionnement et d'occultations, mis en œuvre dans le procédé de supervision selon l'invention ; et
- la figure 10 illustre un processus de vérification automatisée de conformité au planogramme d'un linéaire, mis en œuvre dans le procédé de supervision selon l'invention.

On va maintenant décrire un mode de réalisation de l'invention mettant en œuvre le procédé de supervision selon l'invention au moyen duquel le distributeur ou l'industriel peut visualiser l'évolution du linéaire dans la journée, à intervalles réguliers.

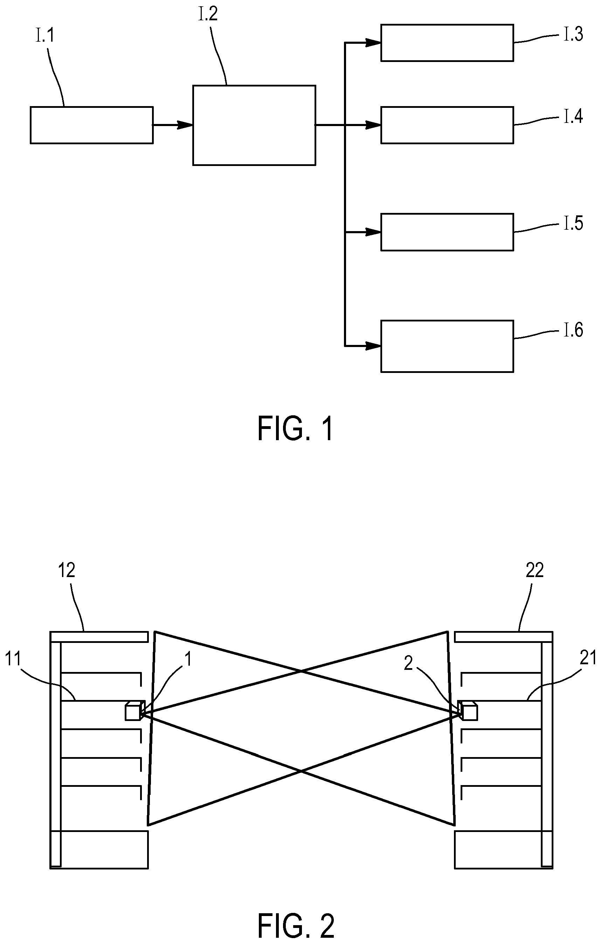

En référence aux figures 1 et 2, une caméra 1, 2, fixée sur le bord avant d'une étagère 11, 21 d'un linéaire 12, 22, acquiert (I.1) en entrée des images d'une scène constituée par plusieurs étagères d'un linéaire 22, 12 situé en vis-à-vis du linéaire 12, 22 et lui-même équipé d'une caméra 2,1.

Ces caméras peuvent être couleur et avoir une cadence d'acquisition de l'ordre de 4 à 12 images par seconde.

A partir de cette acquisition, un traitement d'image est effectué pour constituer (I.2) une image traitée dans laquelle les éventuels clients, personnels ou objets obstruant la prise de vue ont été supprimés.

A partir de cette image traitée, le procédé de supervision selon l'invention procure :
(I.3) une restitution d'images du linéaire, grâce à laquelle le distributeur ou l'industriel peut visualiser l'évolution du linéaire dans la journée, à intervalles réguliers ;
(I.4) une détection de rupture d'approvisionnement du linéaire, notamment une détection d'absence d'un produit en rayon, qui peut être associée à une mesure de la durée de rupture ;
(I.5) une détection de dépôt d'un objet sur une étagère du linéaire, de présence de chariot ou de palette gênant l'accès, ou une vérification du rangement / propreté du linéaire ;
(I.6) une comparaison à un planogramme du linéaire, et une Vérification de la conformité des emplacements des produits par rapport au planogramme.

Toujours en référence à la figure 2, les caméras 1, 2, qui peuvent être éventuellement associées à une caméra 3D (de type « temps de vol », par projection de mire...), sont disposées en face des rayons à surveiller, à hauteur moyenne pour visualiser les rayons jusqu'au fond sans occultation liée à la perspective.

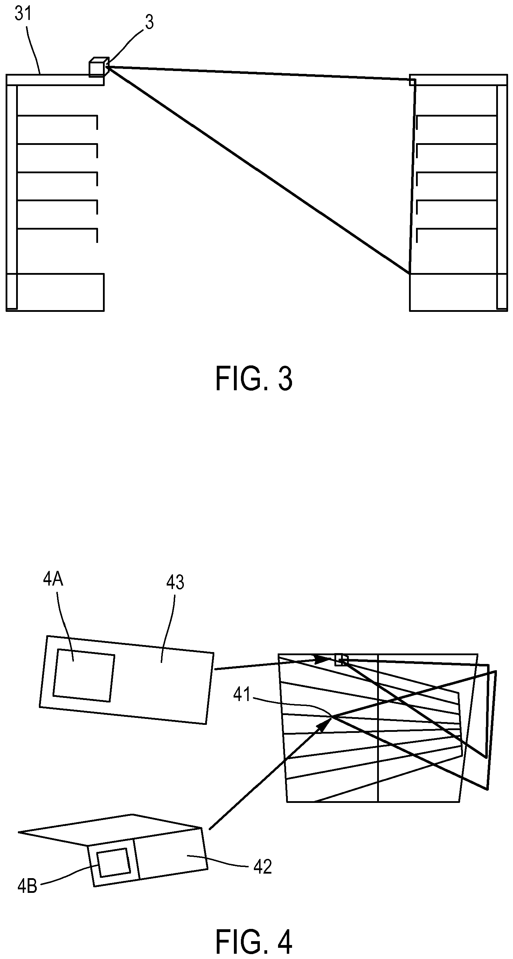

En référence à la figure 3, des caméras 3 peuvent être positionnées au dessus d'un linéaire 31 ou au plafond, face au rayon à surveiller. La perspective causée par le point de vue peut être corrigée pour la restitution.

En référence à la figure 4, des caméras 4A peuvent être dissimulées en haut d'un linéaire, par exemple derrière un miroir sans tain 43 ou un capot infrarouge. On peut aussi prévoir des caméras 4B derrière des miroirs sans tain au sein de réglettes ou de porte-étiquettes 42 fixées au bord d'étagères 41 du linéaire.

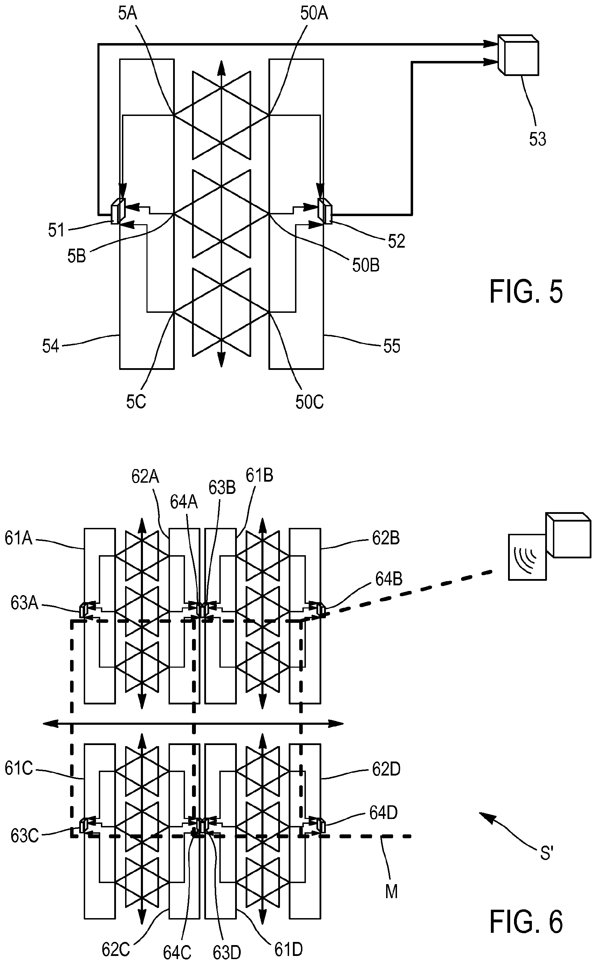

En référence à la figure 5, un système S de supervision selon l'invention comprend, pour chaque linaire 54, 55 équipé de caméras 5A, 5B, 5C ; 50A, 50B, 50C, au moins une unité de calcul compacte 51, 52 à laquelle sont reliées les caméras intégrées dans un ensemble de rayons de ce linéaire.

Les unités de calcul compactes 51, 52 sont reliées via un réseau Ethernet à un système d'information 53 situé en magasin.

Le raccordement des cameras 5A, 5B, 5C à l'unité de calcul compacte 51 peut être sans fil (Wifi, ZigBee...)

Les images acquises par les caméras sont traitées par l'unité de calcul compacte 51, 52 et seules les alertes ou images du linéaire sans les clients sont transmises au système d'information 53.

En référence à la figure 6, il est présenté une variante S' d'un système de supervision selon l'invention dans laquelle on utilise des liaisons sans fils maillées 6, par exemple du type « Wifi Mesh » ou « ZigBee ». Ce maillage couvre par exemple un réseau de caméras équipant un ensemble de linéaires 61A,62A,61B,62B,61C,62C,61D,62D autour de deux allées 63, 64.

Les unités de calcul compactes 63A,64A,63B,64B,63C,64C,63D,64D sont reliées par liaison sans fil via le maillage M à un système d'information 60.

Il est ainsi prévu un routage des informations entre les calculateurs, ce qui procure une simplification du câblage pour l'installation du système de supervision.

Il est à noter que dans un système de supervision selon l'invention, trois types d'unités de traitement sont généralement mises en œuvre :
- en magasin et plus généralement sur un site à superviser, des unités de calcul compactes ou unités de traitement locales ou encore unités "linéaires", situées dans les linéaires et auxquelles sont connectées les caméras,
- un serveur distant, connecté généralement sur Internet et installé chez un hébergeur, et
- un système d'information faisant fonction de concentrateur entre les unités "linéaires" et le serveur distant, et qui est généralement situé localement.

Les unités "linéaires" sont connectées entre elles et avec l'unité « concentrateur" par des liaisons sans fil (par exemple du type Wifi maillé « mesh ») pour plus de facilité d'intégration. Chaque unité "linéaire" constitue donc, en référence à la figure 6, un noeud du maillage. Chaque noeud établit des liaisons sans fils avec ses voisins et effectue le routage des données émises ou transmises par les autres noeuds.

L'unité "concentrateur" fait partie du réseau maillé comme étant le noeud de terminaison. Elle récupère les données des unités "linéaires" et les transmet au serveur externe. La connexion entre le concentrateur et le serveur externe peut alors s'effectuer :
- par liaison xDSL,
- par modem GSM ou GPRS ou UMTS,
- via les réseaux privés des magasins (pont).

Si la configuration des lieux le permet, les unités "linéaires" peuvent être connectées au concentrateur par des liaisons filaires (type Ethernet).

Il est à noter que la fonction "concentrateur" peut aussi être implantée directement dans une unité "linéaire".

Par ailleurs, toutes les informations vidéo sont traitées par l'unité de traitement ou le système d'information en magasin. La détection éventuelle des "trous" peut être effectuée au niveau de l'unité de traitement ou éventuellement sur le serveur distant centralise à partir des images remontées depuis les sites supervisés.

Les traitements d'images sont effectués a priori :
- par les unités "linéaires" pour :
   - au minimum l'anonymisation des images : détection de mouvement et d'occlusion, constitution des images statiques du linéaire en face,
   - optionnellement, une mise « à plat » des images statiques du linéaire pour ressembler aux vues de planogrammes,
   - aussi optionnellement, une détection de trous d'approvisionnement,
- par l'unité « concentrateur » ou le serveur distant :
   - pour la détection de trou d'approvisionnement ou d'occlusion,
   - la comparaison avec les planogrammes.

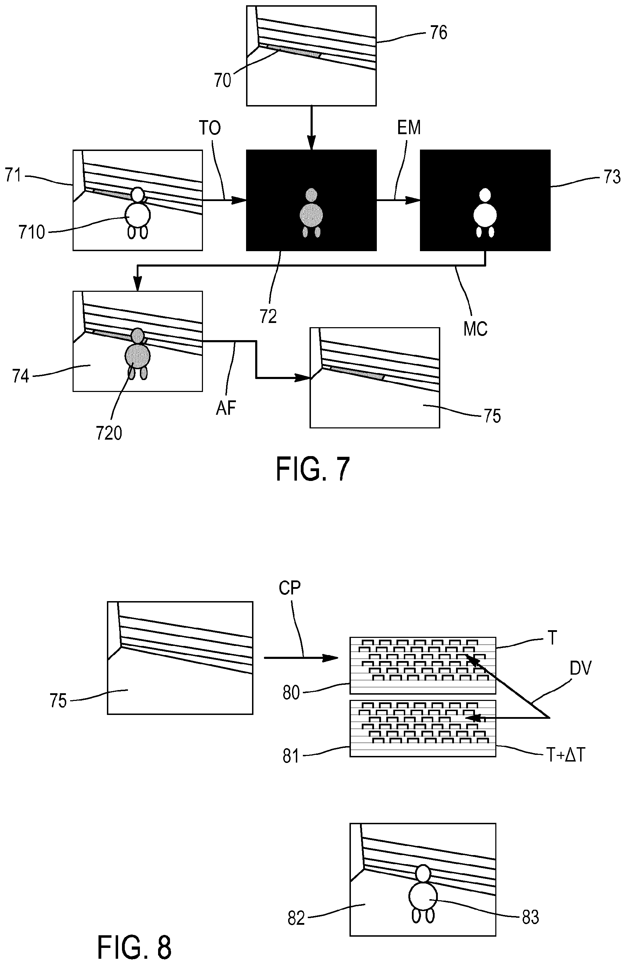

On va maintenant décrire, en référence à la figure 7, le processus d'apprentissage de fond contextualisé mis en œuvre dans le procédé de supervision selon l'invention.

Une caméra du système de supervision selon l'invention fournit une image 71 en entrée qui est traitée immédiatement par l'unité de calcul compacte à laquelle cette caméra est reliée et qui n'est pas stockée.

Cette image 71 contient par exemple une vue d'une cliente 710 passant dans le champ de la caméra de supervision.

Un test d'occultation (TO) est réalisé sur un repère fixe 70 au sein d'une image 76 de la scène supervisée, pour identifier dans l'image traitée 72 le contour 720 de la personne.

Un masque d'occultation 73 est alors extrait (EM) : les objets ou personnes occultant le rayon sont représentés en blanc. Les clients qui dépassent le repère sur le rayon sont exclus.

On réalise alors (MC) un masquage des clients pour l'apprentissage : les parties grisées (en sombre) 720 ne sont pas utilisées pour la mise a jour 74 de la scène de fond.

Le fond 75 est ainsi appris progressivement (AF) en excluant les objets ou personnes devant les rayons.

On va maintenant, en référence à la figure 8, décrire un processus de restitution d'image de fond mis en œuvre dans le procédé de supervision selon l'invention.

A partir de l'image de fond 75 obtenue par apprentissage progressif, on réalise une correction de perspective (CP) de façon à obtenir une restitution périodique du linéaire aplani sur une interface.

Le responsable peut visuellement détecter (DV) ou anticiper les ruptures dans les rayons, en comparant une image 80 traitée après acquisition à un instant T à l'image 81 de la même scène traitée après acquisition à un instant ultérieur T+ΔT.

La mise à jour étant progressive et sur une période assez longue, dans le pire cas, l'image du fond 82 est générée avec seulement des fantômes 83 de clients, ce qui permet ainsi de se conformer aux dispositions légales sur le respect de la confidentialité des personnes en ne générant que des images anonymisées.

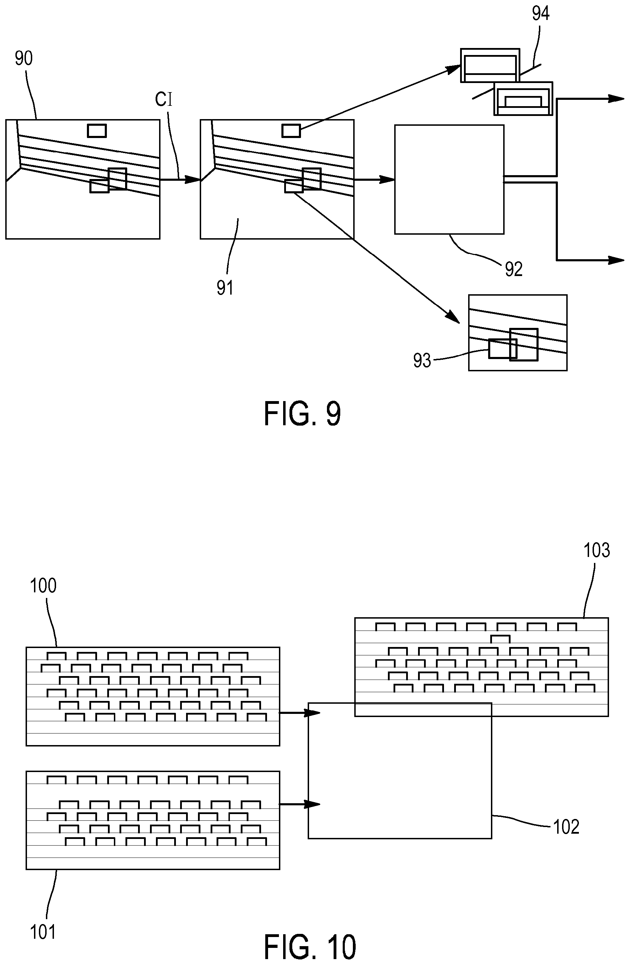

On va maintenant décrire, en référence à la figure 9, un processus de détection automatisée de ruptures d'approvisionnement et d'occultations, mis en œuvre dans le procédé de supervision selon l'invention.

A partir d'une image actuelle 90 de la scène statique, une comparaison est réalisée automatiquement (CI) avec l'image du linéaire qui a été apprise plusieurs minutes plus tôt. Cette comparaison inclut une détection (91) de changement structurel et une vérification (92) des changements structurels détectés, pour vérifier par exemple la détection
- qu'un rayon est bien vide (94), en filtrant notamment les articles orientés différemment (par exemple, un camembert orienté de face ou de profil) ;
- qu'un carton ou tout autre objet tel qu'un chariot ou une palette encombre l'allée (93).

On va maintenant décrire, en référence à la figure 10, un processus de vérification automatisée de conformité au planogramme d'un linéaire, mis en œuvre dans le procédé de supervision selon l'invention.

Une image actuelle 100 de la scène statique aplanie est comparée (102) à un planogramme 101 défini par un distributeur ou un industriel. Les signatures respectives du linéaire actuel et du planogramme prévu sont ainsi comparées afin de détecter (103) un placement non conforme d'un produit.

Bien sûr, l'invention n'est pas limitée aux exemples qui viennent d'être décrits et de nombreux aménagements peuvent être apportés à ces exemples sans sortir du cadre de l'invention, tel que défini par les revendications annexées.

## Revendications

1. Procédé de supervision d'une scène, mis en œuvre pour la supervision de linéaires dans un site de vente, comprenant :
- une prise d'images (71) de cette scène par au moins une caméra (1,2) dont le champ de vision couvre au moins en partie ladite scène, et un traitement de ces images pour détecter un changement survenu dans ladite scène, et
- une détection d'une occultation au moins partielle du champ de vision de ladite caméra par un objet ou une personne (710),
le traitement des images de la scène comprenant un processus d'apprentissage de fond contextualisé, agencé pour supprimer l'image d'une personne ou d'un objet occultant temporairement une partie du champ de vision de ladite scène,
**caractérisé en ce que** le processus d'apprentissage de fond contextualisé comprend :
- un test d'occultation (TO) réalisé sur un repère fixe (70) d'une image (76) de la scène supervisée, de façon à identifier dans l'image traitée (72) un contour (720) de la personne ou de l'objet occultant,
- une extraction (EM) d'un masque d'occultation (73), dans laquelle des objets ou personnes occultant un rayon dudit linéaire sont représentés en blanc et les personnes qui dépassent ledit repère sur ledit rayon sont exclus,
- un masquage (MC), par ledit masque d'occultation (73), des clients passant dans le champ de vision de ladite caméra, de sorte que le fond de scène (75) est appris progressivement (AF) en excluant des objets ou personnes devant ledit rayon,
et **en ce que** ledit procédé de supervision comprend en outre, à la suite du processus d'apprentissage de fond contextualisé :
- un processus de restitution d'une image de fond de scène, et
- un processus de détection automatisée de ruptures d'approvisionnement et d'occultations.

2. Procédé selon la revendication 1, **caractérisé en ce que** le processus de restitution d'une image de fond comprend une correction de perspective appliquée à une image de fond obtenue par apprentissage progressif, de façon à produire une restitution périodique de la scène aplanie.

3. Procédé selon l'une des revendications 1 ou 2, **caractérisé en ce que** le processus de détection automatisée comprend
- une comparaison automatique d'une image traitée et corrigée actuelle d'un linéaire avec une image traitée et corrigée dudit linéaire prise antérieurement,
- une détection d'un changement structurel dans l'image dudit linéaire, et
- une identification dudit changement structurel ainsi détecté.

4. Procédé selon l'une quelconque des revendications précédentes, **caractérisé en ce qu'**il comprend en outre un processus de vérification automatisée de la conformité d'un linéaire supervisé à un planogramme.

5. Système (S,S') de supervision d'une scène, mis en œuvre pour la supervision de linéaires (54,55 ;61A,62A,61B,62B,61C,62C,61D,62D) dans un site de vente, comprenant :
- des moyens pour prendre des images de cette scène par au moins une caméra (1,2 ;3 ;4A,4B ;5A,5B,5C) selon un champ de vision couvre au moins en partie ladite scène, et
- des moyens (51,52 ;63A,64A,63B,64B,63C,64C,63D,64D) pour traiter ces images de façon à :
- détecter un changement survenu dans ladite scène,
- détecter une obstruction au moins partielle du champ de vision desdits moyens de prise d'image par un objet ou une personne, et
les moyens de traitement (51,52;63A,64A,63B,64B,63C,64C,63D,64D) comprenant en outre des moyens d'apprentissage de fond contextualisé, agencés pour supprimer l'image d'une personne ou d'un objet occultant temporairement une partie du champ de vision de ladite scène,
**caractérisé en ce que** les moyens d'apprentissage de fond contextualisé comprennent des moyens pour réaliser :
- un test d'occultation réalisé sur un repère fixe d'une image de la scène supervisée, de façon à identifier dans l'image traitée un contour de la personne ou de l'objet occultant,
- une extraction d'un masque d'occultation, dans laquelle des objets ou personnes occultant un rayon dudit linéaire sont représentés en blanc et les personnes qui dépassent ledit repère sur ledit rayon sont exclus,
et
- un masquage, par ledit masque d'occultation, des clients passant dans le champ de vision de ladite caméra, de sorte que le fond de scène est appris progressivement en excluant des objets ou personnes devant ledit rayon,
et **en ce que** les moyens de prise d'image comprennent des caméras (3,4A,4B) fixées à plusieurs desdits linéaires et agencées pour acquérir des vues d'au moins un rayon d'un linéaire situé en vis-à-vis des dits linéaires auxquelles lesdites caméras (3,4A,4B) sont fixées.

6. Système selon la revendication 5, **caractérisé en ce qu'**il comprend en outre sur chaque linéaire au moins une unité de traitement compacte à laquelle un groupe de caméras fixées sur ledit linéaire sont connectées, lesdites unités de traitement compactes étant reliées à un système d'information équipant le dite de vente et étant agencées pour traiter localement des images reçues des caméras.

7. Système selon la revendication 6, **caractérisé en ce que** le système d'information fait fonction de concentrateur pour acheminer des images traitées reçues des unités de traitement compactes vers un serveur de supervision distant.

8. Système selon l'une quelconque des revendications 6 ou 7, **caractérisé en ce que** des unités de traitement compactes sont en outre agencées pour réaliser localement une anonymisation des images des linéaires en face reçues des caméras connectées auxdites unités de traitement compactes.

9. Système selon la revendication 8, **caractérisé en ce que** des unités de traitement compactes sont en outre agencées pour réaliser une mise à plat des images statiques des linéaires en face reçues des caméras connectées auxdites unités de traitement compactes, de façon à fournir des images de format similaire à celui de planogrammes.

10. Système selon l'une des revendications 6 à 9, **caractérisé en ce que** des unités de traitement compactes sont en outre agencées pour détecter, dans des images de rayons de linéaires en face, des trous d'approvisionnement.

## Patentansprüche

1. Verfahren zum Überwachen einer Szene, das für die Überwachung von Regalen in einer Verkaufsstelle durchgeführt wird, Folgendes umfassend:
- Aufnehmen von Bildern (71) dieser Szene durch mindestens eine Kamera (1, 2), deren Sichtfeld mindestens einen Teil der Szene abdeckt, und Verarbeiten dieser Bilder, um eine Änderung der Szene zu erkennen, und
- Erkennen einer zumindest teilweisen Verdeckung des Sichtfeldes der Kamera durch einen Gegenstand oder eine Person (710), wobei die Verarbeitung der Bilder der Szene einen kontextualisierten Hintergrundlernprozess umfasst, der angeordnet ist, um das Bild einer Person oder eines Gegenstands zu entfernen, das einen Teil des Sichtfeldes der Szene vorübergehend verdeckt, **dadurch gekennzeichnet, dass** der kontextualisierte Hintergrundlernprozess Folgendes umfasst:
- einen Verdeckungstest (TO), der an einer festen Markierung (70) eines Bildes (76) der überwachten Szene durchgeführt wird, um in dem bearbeiteten Bild (72) einen Umriss (720) der verdeckenden Person oder des verdeckenden Gegenstands zu identifizieren,
- eine Extraktion (EM) einer Verdeckungsmaske (73), wobei Gegenstände oder Personen, die eine Markierung an dem Regal verdecken, in weiß dargestellt werden und Personen, die die Markierung an dem Regal passieren, ausgeschlossen sind,
- eine Maskierung (MC), durch die Verdeckungsmaske (73), von Kunden, die sich im Sichtfeld der Kamera bewegen, derart, dass der Hintergrund (75) progressiv gelernt wird (AF), indem Gegenstände oder Personen vor der Markierung ausgeschlossen werden, und dass das Überwachungsverfahren, im Anschluss an den kontextualisierten Hintergrundlernprozess, ferner Folgendes umfasst:
- einen Prozess zum Rendern eines Hintergrundbildes und
- einen automatisierten Erkennungsprozess von Versorgungsunterbrechungen und Verdeckungen.

2. Verfahren nach Anspruch 1, **dadurch gekennzeichnet, dass** der Prozess der Wiedergabe eines Hintergrundbildes eine perspektivische Korrektur umfasst, die auf ein durch progressives Lernen erhaltenes Hintergrundbild angewendet wird, um eine periodische Wiedergabe der abgeflachten Szene zu erzeugen.

3. Verfahren nach einem der Ansprüche 1 oder 2, **dadurch gekennzeichnet, dass** das automatisierte Erkennungsverfahren Folgendes umfasst:
- einen automatischen Vergleich eines aktuell bearbeiteten und korrigierten Bildes eines Regals mit einem zuvor aufgenommenen bearbeiteten und korrigierten Bild dieses Regals,
- eine Erkennung einer strukturellen Veränderung im Bild des Regals, und
- eine Identifizierung der so erkannten Strukturänderung.

4. Verfahren nach einem der vorhergehenden Ansprüche, **dadurch gekennzeichnet, dass** es ferner ein Verfahren zur automatischen Überprüfung der Konformität eines überwachten Regals mit einem Planogramm umfasst.

5. System (S, S') zur Überwachung einer Szene, implementiert zum Überwachen von Regalen (54, 55; 61A, 62A, 61B, 62B, 61C, 62C, 61D, 62D) in einer Verkaufsstelle, Folgendes umfassend:
- Mittel zum Aufnehmen von Bildern dieser Szene mit mindestens einer Kamera (1,2;3;4A,4B;5A,5B,5C) entsprechend einem Sichtfeld, das die Szene zumindest teilweise verdeckt, und
- Mittel (51,52;63A,64A,63B,64B,63C,64C,63D,64D) zum Verarbeiten dieser Bilder für folgende Zwecke:
- Erkennen einer Änderung in der Szene,
- Erkennen einer zumindest teilweisen Verdeckung des Sichtfeldes der Bildaufnahmemittel durch einen Gegenstand oder eine Person, wobei die Verarbeitungsmittel (51, 52; 63A, 64A, 63B, 64B, 63C, 64 C, 63D, 64D) ferner kontextualisierte Hintergrundlernmittel umfassen, die so angeordnet sind, dass sie das Bild einer Person oder eines Gegenstands, das vorübergehend einen Teil des Sichtfeldes der Szene verdeckt, unterdrücken, **dadurch gekennzeichnet, dass** die kontextualisierten Hintergrundlernmittel Mittel umfassen, um Folgendes durchzuführen:
- einen Verdeckungstest, der an einer festen Markierung eines Bildes der überwachten Szene durchgeführt wird, um in dem bearbeiteten Bild einen Umriss der verdeckenden Person oder des verdeckenden Gegenstands zu identifizieren,
- eine Extraktion einer Verdeckungsmaske, wobei Gegenstände oder Personen, die eine Markierung des Regals verdecken, in weiß dargestellt werden und Personen, die die Markierung an dem Regal passieren, ausgeschlossen sind, und
- eine Maskierung, durch die Verdeckungsmaske, von Kunden, die sich in dem Sichtfeld der Kamera bewegen, derart, dass der Hintergrund der Szene progressiv gelernt wird, indem Gegenstände oder Personen vor der Markierung ausgeschlossen werden, und dadurch, dass die Bildaufnahmemittel Kameras (3, 4A, 4B) umfassen, die an mehreren der Regale befestigt sind und so angeordnet sind, dass sie Ansichten von mindestens einer Markierung eines Regals erfassen, das sich gegenüber den Regalen befindet, an denen die Kameras (3, 4A, 4B) befestigt sind.

6. System nach Anspruch 5, **dadurch gekennzeichnet, dass** es ferner auf jedem Regal mindestens eine kompakte Verarbeitungseinheit umfasst, mit der eine Gruppe von Kameras verbunden ist, die an dem Regal befestigt sind, wobei die kompakten Verarbeitungseinheiten mit einem Informationssystem verbunden sind, das das Regal ausstattet und so angeordnet ist, dass es die von den Kameras empfangenen Bilder vor Ort verarbeitet.

7. System nach Anspruch 6, **dadurch gekennzeichnet, dass** das Informationssystem als Konzentrator zum Weiterleiten verarbeiteter Bilder, die von den kompakten Verarbeitungseinheiten empfangen werden, an einen entfernten Überwachungsserver dient.

8. System nach einem der Ansprüche 6 oder 7, **dadurch gekennzeichnet, dass** die kompakten Verarbeitungseinheiten ferner so angeordnet sind, dass sie vor Ort eine Anonymisierung der Bilder der gegenüberliegenden Regale durchführen, die von den an die kompakten Verarbeitungseinheiten angeschlossenen Kameras empfangen werden.

9. System nach Anspruch 8, **dadurch gekennzeichnet, dass** die kompakten Verarbeitungseinheiten ferner so angeordnet sind, dass sie eine Abflachung der statischen Bilder der gegenüberliegenden Regale durchführen, die von den an die kompakten Verarbeitungseinheiten angeschlossenen Kameras empfangen werden, um so Bilder eines Formats ähnlich dem von Planogrammen zu liefern.

10. System nach einem der Ansprüche 6 bis 9, **dadurch gekennzeichnet, dass** kompakte Verarbeitungseinheiten ferner so angeordnet sind, dass sie Versorgungsunterbrechungen in Bildern von Markierungen von gegenüberliegenden Regalen erkennen.

## Claims

1. Method for monitoring a scene, implemented for monitoring shelf spaces in a retail site, comprising:
- taking images (71) of said scene by means of at least one camera (1, 2) of which the field of vision at least partially covers said scene, and processing said images to detect a change which has occurred in said scene, and
- detecting if the field of vision of said camera is at least partially blocked by an object or a person (710), the processing of the images of the scene comprising a contextualized background learning process designed to delete the image of a person or an object temporarily blocking part of the field of vision of said scene, **characterized in that** the background contextualized learning process comprises:
- a blocking test (TO) carried out on a fixed frame of reference (70) of an image (76) of the monitored scene, so as to identify an outline (720) of the blocking person or object in the processed image (72),
- extracting (EM) a blocking mask (73), in which objects or people blocking a shelf of said shelf space are represented in white and the people who exceed said frame of reference on said shelf are excluded,
- masking (MC), by means of said blocking mask (73), customers passing through the field of vision of said camera, such that the scene background (75) is progressively learned (AF) by excluding objects or people in front of said shelf,
and **in that** said monitoring method further comprises, following the contextualized background learning process:
- a process for rendering a scene background image; and
- an automated process for detecting supply shortages and blockages.

2. Method according to claim 1, **characterized in that** the process for rendering a background image comprises a perspective correction applied to a background image obtained by progressive learning, so as to produce periodic rendering of the leveled scene.

3. Method according to either claim 1 or claim 2, **characterized in that** the automated detection process comprises:
- automatically comparing a current processed and corrected image of a shelf space with a processed and corrected image of said shelf space taken previously;
- detecting a structural change in the image of said shelf space; and
- identifying said structural change detected in this manner.

4. Method according to any of the preceding claims, **characterized in that** it further comprises a process for automatically verifying the conformity of a monitored shelf space to a planogram.

5. System (S, S') for monitoring a scene, implemented for monitoring shelf spaces (54, 55; 61A, 62A, 61B, 62B, 61C, 62C, 61D, 62D) in a retail site, comprising:
- means for taking images of said scene by means of at least one camera (1, 2; 3; 4A, 4B; 5A, 5B, 5C) according to a field of vision which at least partially covers said scene; and
- means (51, 52; 63A, 64A, 63B, 64B, 63C, 64C, 63D, 64D) for processing said images so as to:
- detect a change which has occurred in said scene;
- detect an at least partial obstruction of the field of vision of said image-taking means by an object or a person, and
the processing means (51, 52; 63A, 64A, 63B, 64B, 63C, 64C, 63D, 64D) further comprising contextualized background learning means designed to delete the image of a person or an object temporarily blocking part of the field of vision of said scene,
**characterized in that** the contextualized background learning means comprise means to carry out:
- a blocking test carried out on a fixed frame of reference of an image of the monitored scene, so as to identify an outline of the blocking person or object in the processed image;
- extracting a blocking mask, in which objects or people blocking a shelf of said shelf space are represented in white and the people who exceed said frame of reference on said shelf are excluded; and
- masking, by means of said blocking mask, customers passing through the field of vision of said camera, such that the scene background is progressively learned by excluding objects or people in front of said shelf,
and **in that** the image-taking means comprise cameras (3,4A, 4B) attached to a plurality of said shelf spaces and designed to acquire views of at least one shelf of a shelf space located opposite said shelf spaces to which said cameras (3, 4A, 4B) are attached.

6. System according to claim 5, **characterized in that** it further comprises, on each shelf space, at least one compact processing unit to which a group of cameras are connected, which cameras are fixed to said shelf space, said compact processing units being connected to an information system with which the retail site is equipped and said compact processing units being designed to locally process images received from the cameras.

7. System according to claim 6, **characterized in that** the information system acts as a concentrator for routing processed images received from the compact processing units to a remote monitoring server.

8. System according to either claim 6 or claim 7, **characterized in that** the compact processing units are further designed to locally anonymize the images of the opposite shelf spaces received from the cameras connected to said compact processing units.

9. System according to claim 8, **characterized in that** the compact processing units are further designed to flatten the static images of the opposite shelf spaces received from the cameras connected to said compact processing units, so as to provide images in a format similar to that of planograms.

10. System according to any of claims 6 to 9, **characterized in that** the compact processing units are further designed to detect supply gaps in images of shelves of opposite shelf spaces.
